# EUROPEAN PATENT APPLICATION

(11) **EP 4 629 535 A1**
(43) Date of publication of application: **08.10.2025**
(21) Application number: 24759420.3
(22) Date of filing: 02.01.2024
(51) Int. Cl.: H04J 14/02

(54) **COMMUNICATION METHOD AND RELATED APPARATUS**

(30) Priority: 22.02.2023 CN 202310189555
(71) Applicant: Huawei Technologies Co., Ltd., Shenzhen, Guangdong 518129 (CN)
(72) Inventor: ZHANG, Kuo, Shenzhen, Guangdong 518129 (CN); LI, Liangchuan, Shenzhen, Guangdong 518129 (CN); CHANG, Tianhai, Shenzhen, Guangdong 518129 (CN); YUAN, He, Shenzhen, Guangdong 518129 (CN)
(74) Representative: Isarpatent
(86) International application number: PCT/CN2024/070042
(87) International publication number: WO 2024/174741

(57) **Abstract**

Embodiments of this application disclose a communication method and a related apparatus, to avoid collision between a first leaf node and another leaf node in frequency domain and time domain. The method provided in this application is applied to a time-frequency multiple access system, and the time-frequency multiple access system includes a central node and a first leaf node. The method includes: The first leaf node sends a first uplink signal to the central node. The first leaf node receives first information and second information from the central node. The first information and the second information are determined based on the first uplink signal. The first information indicates a transmit wavelength of a laser of the first leaf node, and the second information indicates a first uplink sending window. The first leaf node sends, in the first uplink sending window, a second uplink signal to the central node via the laser at a first wavelength. The first wavelength is determined based on the first information, and the first uplink sending window is determined based on the second information.

## Description

This application claims priority to Chinese Patent Application No. 202310189555.4, filed with the China National Intellectual Property Administration on February 22, 2023 and entitled "COMMUNICATION METHOD AND RELATED APPARATUS", which is incorporated herein by reference in its entirety.

### TECHNICAL FIELD

This application relates to the field of optical communication technologies, and in particular, to a communication method and a related apparatus.

### BACKGROUND

A point to multi-point (point to multi-point, P2MP) technology has been widely applied in the optical network field. A P2MP network based on frequency division multiple access (frequency division multiple access, FDMA) and time division multiple access (Time division multiple access, TDMA) is an important technology, and is mainly applied to a metropolitan area network, an access network, a wireless fronthaul network, and a wireless backhaul network.

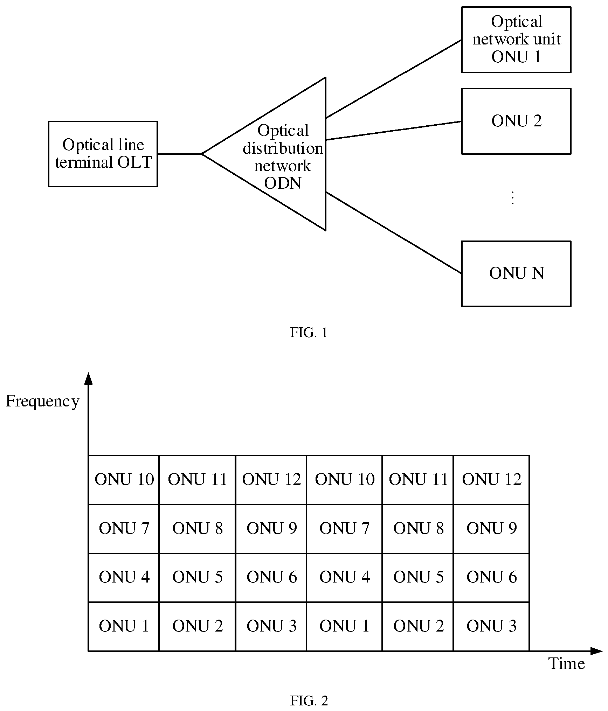

The P2MP network includes a central node and a leaf node. As shown in FIG. 1, the P2MP network based on the FDMA and the TDMA is applied to the access network, an optical line terminal (optical line terminal, OLT) is the central node, and an optical network unit (optical network unit, ONU) is the leaf node. As shown in FIG. 2, in the access network, a corresponding time-frequency resource block is allocated to each ONU. Each ONU sends, on the time-frequency resource block allocated to the ONU, an uplink signal to the OLT.

Therefore, the leaf node should accurately send, on a time-frequency resource block allocated to the leaf node, an uplink signal to the central node. In this way, collision between the leaf node and another leaf node in frequency domain and time domain is avoided. Therefore, how the leaf node sends, on the time-frequency resource block allocated to the leaf node, an uplink signal to the central node is a problem worth considering.

### SUMMARY

This application provides a communication method and a related apparatus, to implement that a first leaf node sends, in a first uplink sending window, a second uplink signal to a central node via a laser at a first wavelength, so as to avoid collision between the first leaf node and another leaf node in frequency domain and time domain.

A first aspect of this application provides a communication method, and the method is applied to a time-frequency multiple access system. The time-frequency multiple access system includes a central node and a first leaf node. The method includes: The first leaf node sends a first uplink signal to the central node. Then, the first leaf node receives first information and second information from the central node. The first information and the second information are determined based on the first uplink signal. The first information indicates a transmit wavelength of a laser of the first leaf node. The second information indicates a first uplink sending window. Then, the first leaf node sends, in the first uplink sending window, a second uplink signal to the central node via the laser at a first wavelength. The first wavelength is determined based on the first information. The first uplink sending window is determined based on the second information. In this way, collision between the first leaf node and another leaf node in the time-frequency multiple access system in frequency domain and time domain is avoided. Communication service interruption is avoided, and communication performance is improved.

Based on the first aspect, in an optional implementation, that the first leaf node sends, in the first uplink sending window, the second uplink signal to the central node via the laser at the first wavelength includes: The first leaf node sends the second uplink signal to the central node via the laser at the first wavelength. The first leaf node receives third information from the central node. The third information is determined by the central node based on the second uplink signal. The third information indicates a transmit wavelength of the laser of the first leaf node. The first leaf node sends, in the first uplink sending window, a third uplink signal to the central node via the laser at a second wavelength. The second wavelength is determined based on the third information. In this implementation, that the first leaf node further adjusts the transmit wavelength of the laser based on the third information can be implemented. In this way, the first leaf node may accurately send an uplink signal at a corresponding frequency domain position. In this way, the collision between the first leaf node and the another leaf node in frequency domain is further avoided, and the communication performance is improved.

Based on the first aspect, in an optional implementation, that the first leaf node sends the first uplink signal to the central node includes: The first leaf node sends the first uplink signal to the central node via the laser at a third wavelength. An absolute value of a difference between transmit power of the first uplink signal and transmit power of a leaf node that has been online and that is in the time-frequency multiple access system is within a first interval. The third wavelength is a wavelength within an uplink operating wavelength range of the time-frequency multiple access system. In this implementation, the transmit power of the first uplink signal is controlled within a specific range. This helps reduce or avoid interference from the first leaf node to the leaf node that has been online and that is in the time-frequency multiple access system. The communication performance of the system is improved.

Based on the first aspect, in an optional implementation, the first interval is [5 dB, 25 dB]. In this implementation, a specific example of the first interval is shown. The absolute value of the difference between the transmit power of the first uplink signal and the transmit power of the leaf node that has been online and that is in the time-frequency multiple access system is greater than or equal to 5 and less than or equal to 25. This ensures that the central node can receive the first uplink signal. In addition, the interference to the another leaf node in the time-frequency multiple access system is further avoided or reduced.

Based on the first aspect, in an optional implementation, that the first leaf node sends the first uplink signal to the central node includes: The first leaf node sends the first uplink signal to the central node via the laser at a fourth wavelength. The fourth wavelength is a wavelength outside the operating wavelength range of the time-frequency multiple access system. Therefore, the interference to the another leaf node in the time-frequency multiple access system is avoided, and the communication performance is improved.

Based on the first aspect, in an optional implementation, the first information includes a first frequency offset between the first leaf node and the central node. The method further includes: The first leaf node determines a first center frequency. The first center frequency is a center frequency that is in an operating frequency band range and that is allocated by the central node to the first leaf node. The first leaf node adjusts the first center frequency based on the first frequency offset. The first leaf node adjusts the transmit wavelength of the laser. An adjusted transmit wavelength used by the laser is the first wavelength. The first wavelength corresponds to an adjusted first center frequency. The foregoing implementation shows a process in which the first leaf node adjusts the transmit wavelength of the laser. In this way, the first leaf node sends, within the operating frequency band range, an uplink signal to the central node. In this way, the collision between the first leaf node and the another leaf node in frequency domain is avoided. The communication performance is improved.

Based on the first aspect, in an optional implementation, that the first leaf node adjusts the transmit wavelength of the laser includes:
The first leaf node adjusts a temperature and/or a drive current of the laser. In this implementation, the first leaf node adjusts the transmit wavelength of the laser. This facilitates implementation of the solutions.

Based on the first aspect, in an optional implementation, the second information includes a distance or round-trip time between the first leaf node and the central node. The method further includes: The first leaf node determines a delay amount or a timing advance based on the distance or the round-trip time. The first leaf node adjusts a start position and/or an end position of a second uplink sending window based on the delay amount or the timing advance, to obtain the first uplink sending window. The second uplink sending window is allocated by the central node to the first leaf node. The foregoing implementation shows a manner in which the first leaf node determines the first uplink sending window. In this way, the first leaf node sends, in the first uplink sending window, an uplink signal to the central node. In this way, the collision between the first leaf node and the another leaf node in time domain is avoided. Service interruption is avoided, and the communication performance is improved.

Based on the first aspect, in an optional implementation, the second information includes a delay amount or a timing advance. The method further includes: The first leaf node adjusts a start position and/or an end position of a second uplink sending window based on the delay amount or the timing advance, to obtain the first uplink sending window. The second uplink sending window is allocated by the central node to the first leaf node. The foregoing implementation shows another manner in which the first leaf node determines the first uplink sending window. In this way, the first leaf node sends, in the first uplink sending window, an uplink signal to the central node. In this way, the collision between the first leaf node and the another leaf node in time domain is avoided. Service interruption is avoided, and the communication performance is improved.

Based on the first aspect, in an optional implementation, before the first leaf node sends the first uplink signal to the central node, the method further includes: The first leaf node receives first indication information from the central node. The first indication information indicates all leaf nodes in the time-frequency multiple access system to transmit an uplink signal. In this way, in a process in which the first leaf node accesses a network, the another leaf node in the time-frequency multiple access system can normally send an uplink signal. In this way, system resources are fully utilized. Service interruption of the another leaf node is avoided, and the communication performance is improved.

Based on the first aspect, in an optional implementation, the method further includes: The first leaf node receives second indication information from the central node. The second indication information indicates the leaf node that has been online to stop sending an uplink signal in a silent window and indicates the first leaf node to send an uplink signal in the silent window. That the first leaf node sends the first uplink signal to the central node includes: The first leaf node sends, in the silent window, the first uplink signal to the central node. In this way, in a process in which the first leaf node accesses a network, the another leaf node in the time-frequency multiple access system stops performing uplink sending. The interference from the first leaf node to the another leaf node is avoided. The communication performance is improved.

A second aspect of this application provides a communication method, and the method is applied to a time-frequency multiple access system. The time-frequency multiple access system includes a central node and a first leaf node. The method includes: The central node receives a first uplink signal from the first leaf node. The central node determines first information and second information based on the first uplink signal. The first information indicates a transmit wavelength of a laser of the first leaf node. The second information indicates a first uplink sending window. The central node sends the first information and the second information to the first leaf node. The central node receives, in the first uplink sending window, a second uplink signal from the first leaf node. The second uplink signal is sent by the first leaf node via the laser at a first wavelength. The first wavelength is determined based on the first information. The first uplink sending window is determined based on the second information. For beneficial effects shown in this aspect, refer to those shown in the first aspect. Details are not described again.

Based on the second aspect, in an optional implementation, that the central node receives, in the first uplink sending window, the second uplink signal from the first leaf node includes: The central node receives the second uplink signal from the first leaf node. The second uplink signal is sent by the first leaf node via the laser at the first wavelength. The central node determines third information based on the second uplink signal. The third information indicates a transmit wavelength of the laser. The central node sends the third information to the first leaf node. The central node receives a third uplink signal sent by the first leaf node. The third uplink signal is sent by the first leaf node via the laser at a second wavelength. The second wavelength is determined based on the third information.

Based on the second aspect, in an optional implementation, the first information includes a first frequency offset between the first leaf node and the central node. In this way, the first leaf node adjusts the transmit wavelength of the laser based on the first frequency offset.

Based on the second aspect, in an optional implementation, the second information includes a distance or round-trip time between the first leaf node and the central node, or the second information includes a delay amount or a timing advance. The delay amount or the timing advance is determined based on the distance or the round-trip time.

Based on the second aspect, in an optional implementation, a wavelength of the first uplink signal is a third wavelength. The third wavelength is a wavelength within an operating wavelength range of the time-frequency multiple access system. An absolute value of a difference between transmit power of the first uplink signal and transmit power of a leaf node that has been online and that is in the time-frequency multiple access system is within a first interval.

Based on the second aspect, in an optional implementation, the first interval is [5 dB, 25 dB].

Based on the second aspect, in an optional implementation, a wavelength of the first uplink signal is a fourth wavelength. The fourth wavelength is a wavelength outside the operating wavelength range of the time-frequency multiple access system.

Based on the second aspect, in an optional implementation, the method further includes: The central node sends first indication information. The first indication information indicates all leaf nodes in the time-frequency multiple access system to transmit an uplink signal.

Based on the second aspect, in an optional implementation, the method further includes: The central node sends second indication information. The second indication information indicates the leaf node that has been online to stop sending an uplink signal in a silent window and indicates the first leaf node to send an uplink signal in the silent window. That the central node receives the first uplink signal from the first leaf node includes: The central node receives, in the silent window, the first uplink signal from the first leaf node.

A third aspect of this application provides a digital processing chip. The digital processing chip includes a processor and a memory. The memory and the processor are interconnected through a line. The memory stores instructions. The processor is configured to perform the communication method according to any one of the first aspect or the second aspect.

A fourth aspect of this application provides an optical communication apparatus. The optical communication apparatus includes a processor and an optical transceiver. The processor is configured to perform a processing function performed by the first leaf node shown in any one of the first aspect. The optical transceiver is configured to perform receiving and sending functions performed by the first leaf node shown in the first aspect.

Based on the fourth aspect, in an optional implementation, the optical communication apparatus further includes a memory. The processor, the memory, and the optical transceiver are interconnected through a line. The processor is configured to schedule program code in the memory to perform the processing function performed by the first leaf node shown in any one of the first aspect.

A fifth aspect of this application provides an optical communication apparatus. The optical communication apparatus includes a processor and an optical transceiver. The processor is configured to perform a processing function performed by the central node shown in any one of the second aspect. The optical transceiver is configured to perform receiving and sending functions performed by the central node shown in the second aspect.

Based on the fifth aspect, in an optional implementation, the optical communication apparatus further includes a memory. The processor, the memory, and the optical transceiver are interconnected through a line. The processor is configured to schedule program code in the memory to perform the processing function performed by the central node shown in any one of the second aspect.

A sixth aspect of this application provides a computer-readable storage medium. The computer-readable storage medium includes instructions. When the computer-readable storage medium is run on a computer, the computer is enabled to perform the communication method in any one of the implementations of the first aspect or the second aspect.

A seventh aspect of this application provides a computer program product including instructions. When the computer program product runs on a computer, the computer is enabled to perform the communication method in any one of the implementations of the first aspect or the second aspect.

### BRIEF DESCRIPTION OF DRAWINGS

FIG. 1 is a diagram of a structure of an access network;
FIG. 2 is a diagram of a time-frequency resource block allocated to each ONU in an access network;
FIG. 3 is a diagram of a structure of a metropolitan area network;
FIG. 4 is a diagram of a structure of a data center network;
FIG. 5A is a diagram of a frequency domain resource block and a time domain resource block that are allocated to each leaf node;
FIG. 5B is a diagram of collision between leaf nodes in frequency domain and time domain;
FIG. 6 is a flowchart of steps of an embodiment of a communication method according to an embodiment of this application; and
FIG. 7 is a diagram of a structure of an optical communication apparatus according to an embodiment of this application.

### DESCRIPTION OF EMBODIMENTS

The technical solutions in this application are applied to a time-frequency multiple access system, for example, a P2MP network based on FDMA and TDMA. The time-frequency multiple access system includes a central node and a leaf node. For ease of description, a communication direction from the central node to the leaf node is defined as a downlink direction, and a communication direction from the leaf node to the central node is defined as an uplink direction. A time-frequency resource in the time-frequency multiple access system is divided into a plurality of time-frequency resource blocks. The central node allocates a corresponding time-frequency resource block to each leaf node. Each leaf node may send, on the time-frequency resource block allocated to the leaf node, an uplink signal to the central node.

Optionally, the time-frequency multiple access system is mainly applied to an access network, a metropolitan area network, a data center network, a wireless fronthaul network, and a wireless backhaul network. This is not specifically limited in this application.

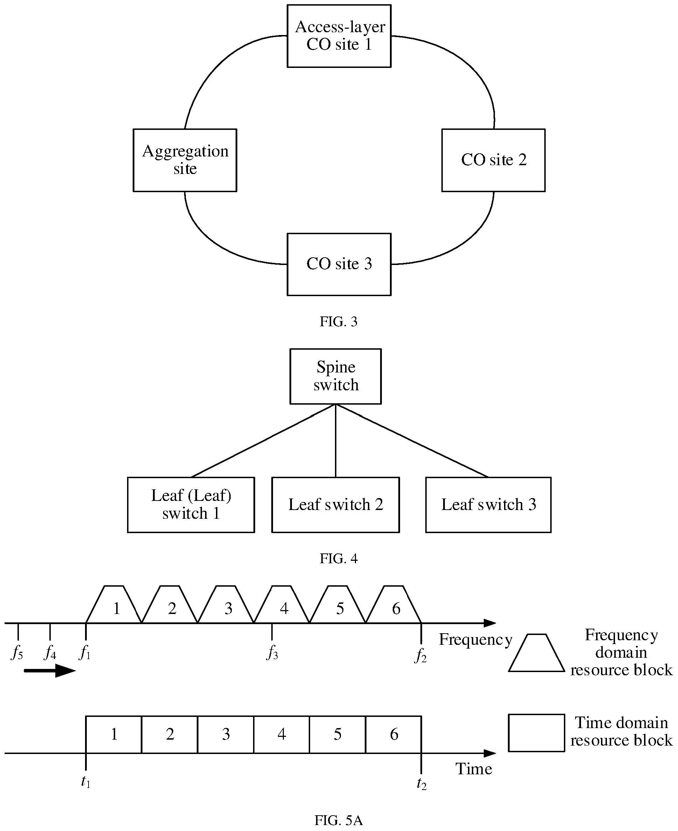

FIG. 3 is a diagram of a structure of a metropolitan area network. As shown in FIG. 3, in the metropolitan area network, an aggregation site serves as a central node, and a central office (Central Office, CO) site serves as a leaf node. The aggregation site sends a downlink signal to the CO site in a broadcast manner. Each CO site sends, on a time-frequency resource block allocated to the CO site, an uplink signal to the aggregation site.

FIG. 4 is a diagram of a structure of a data center network. As shown in FIG. 4, in the data center network, a spine (spine) switch serves as a central node, and a leaf (leaf) switch serves as a leaf node. The spine switch sends a downlink signal to the leaf switch in a broadcast manner. Each leaf switch sends, on a time-frequency resource block allocated to the leaf switch, an uplink signal to the spine switch.

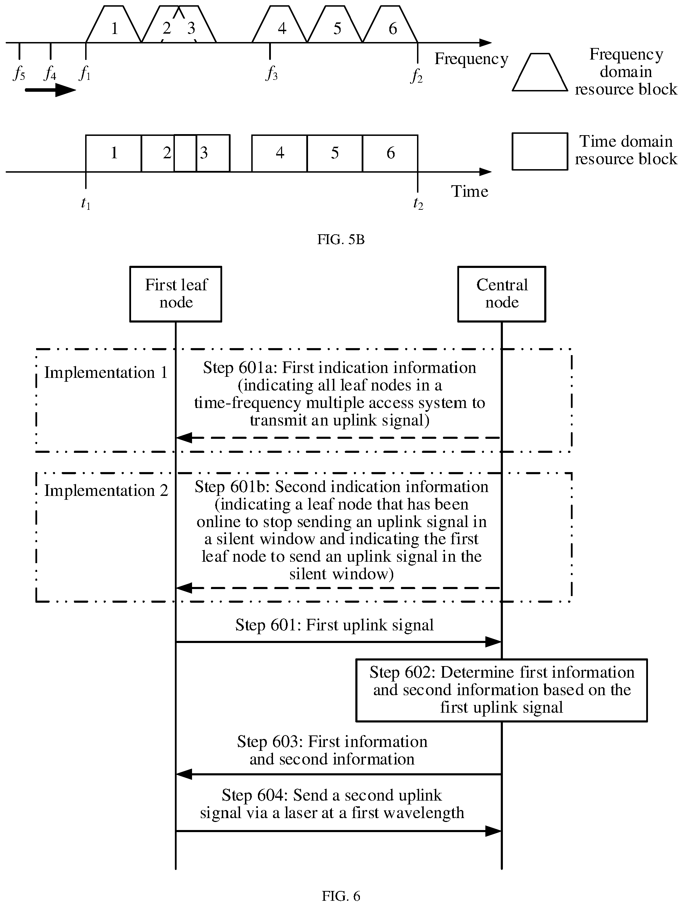

To better understand a method shown in this application, the following describes, with reference to FIG. 5A and FIG. 5B, problems currently faced when a leaf node that is to go online accesses the time-frequency multiple access system. The leaf node that is to go online is a leaf node that is to access the time-frequency multiple access system. A leaf node that has been online is a leaf node that has accessed the time-frequency multiple access system.

As shown in FIG. 5A, a frequency domain resource block 1 and a time domain resource block 1 are allocated to a leaf node 1. A frequency domain resource block 2 and a time domain resource block 2 are allocated to a leaf node 2. A frequency domain resource block 3 and a time domain resource block 3 are allocated to a leaf node 3. A frequency domain resource block 4 and a time domain resource block 4 are allocated to a leaf node 4. A frequency domain resource block 5 and a time domain resource block 5 are allocated to a leaf node 5. A frequency domain resource block 6 and a time domain resource block 6 are allocated to a leaf node 6. The leaf nodes 1, 2, 4, 5, and 6 are all leaf nodes that have been online. The leaf node 3 is a leaf node that is to go online.

When the leaf node 3 accesses a network, the leaf node 3 determines a frequency domain position of the frequency domain resource block 3, and adjusts a laser, to cause the laser to use a corresponding transmit wavelength. The leaf node 3 determines a time position of the time domain resource block 3, and sends an uplink signal at the time position. However, there is a frequency offset between the leaf node 3 and a central node. As a result, the leaf node 3 collides with another leaf node (for example, a leaf node that has been online) in frequency domain, and consequently, a communication service is interrupted. For example, as shown in FIG. 5B, a frequency domain resource occupied by a leaf node 3 overlaps a frequency domain resource occupied by a leaf node 2. As a result, interference exists in uplink transmission between the leaf node 3 and the leaf node 2. In addition, a central node cannot correctly receive an uplink signal sent by each of the leaf node 2 and the leaf node 3. Consequently, a communication service is interrupted, and communication performance is affected.

The leaf node 3 determines a time position of a time domain resource block 3, and sends, at the time position, an uplink signal to the central node. However, distances from different leaf nodes to the central node are different. As a result, the leaf node 3 collides with, in time domain, a leaf node that has been online, and consequently, the communication service is interrupted. As shown in an example in FIG. 5B, a time domain resource occupied by the leaf node 3 overlaps a time domain resource occupied by the leaf node 2. The leaf node 2 and the leaf node 3 each send an uplink signal to the central node simultaneously. As a result, the central node cannot identify the uplink signal sent by each of the leaf node 2 and the leaf node 3. Consequently, the communication service is interrupted, and the communication performance is affected.

It should be understood that the foregoing describes the problems faced when the leaf node that is to go online accesses the network. Actually, the communication method provided in this application is applicable to a process in which a leaf node goes online, and is also applicable to another process. This is not specifically limited in this application. For example, the communication method is applicable to a communication process of a leaf node. The following mainly describes the technical solutions by using a process in which a first leaf node accesses a network as an example.

This application provides a communication method, to implement that a first leaf node sends, in a first uplink sending window, a second uplink signal to a central node via an uplink laser at a first wavelength. In this way, collision between the first leaf node and another leaf node in a time-frequency multiple access system in frequency domain and time domain is avoided. In this way, communication service interruption is avoided, and communication performance is improved.

FIG. 6 is a flowchart of steps of an embodiment of a communication method according to this application. The communication method is applied to a time-frequency multiple access system, and the time-frequency multiple access system includes a central node and a first leaf node. As shown in FIG. 6, the method includes the following plurality of steps.

Step 601: The first leaf node sends a first uplink signal to the central node.

The following describes two possible implementations in which the first leaf node sends the first uplink signal.

Implementation 1: The first leaf node sends the first uplink signal to the central node via a laser at a third wavelength. An absolute value of a difference between transmit power of the first uplink signal and transmit power of a leaf node that has been online and that is in the time-frequency multiple access system is within a first interval. The third wavelength is a wavelength within an uplink operating wavelength range of the time-frequency multiple access system.

The first leaf node enables the laser. Then, the first leaf node adjusts a transmit wavelength of the laser. The adjusted laser uses the third wavelength as a transmit wavelength. Then, the first leaf node sends the first uplink signal to the central node via the laser at the third wavelength. For example, as shown in FIG. 5A, an uplink operating frequency band range of the time-frequency multiple access system is [*f*₁, *f*₂]. It can be learned from a formula *f* = *c* / *λ* that the uplink operating wavelength range of the time-frequency multiple access system is [*λ*₁, *λ*₂]. In the formula, *f* represents a frequency, C represents a speed of light, and *λ* represents a wavelength. The third wavelength may be *λ*₃, where *λ*₃ belongs to [*λ*₁, *λ*₂]. The third wavelength corresponds to a frequency *f*₃. Therefore, the transmit power of the first uplink signal is controlled within a specific range. In this way, interference to the leaf node that has been online is avoided.

Optionally, the first interval is [5 dB, 25 dB], [5 dB, 25 dB), or (5 dB, 25 dB]. This helps ensure that the central node can receive the first uplink signal from the first leaf node. In addition, the interference to the leaf node that has been online is avoided or reduced.

Implementation 2: The first leaf node sends the first uplink signal to the central node via a laser at a fourth wavelength. The fourth wavelength is a wavelength outside an operating wavelength range of the time-frequency multiple access system. As shown in FIG. 5A, an uplink operating frequency band range of the time-frequency multiple access system is [*f*₁*, f*₂]. Therefore, the uplink operating wavelength range of the time-frequency multiple access system is [*λ*₁, *λ*₂]. The fourth wavelength may be *λ*₄. The transmit wavelength *λ*₄ corresponds to a frequency *f*₄ . *λ*₄ is a wavelength outside [*λ*₁, *λ*₂]. In this way, interference to a leaf node that has been online is avoided.

It should be noted that, before the first leaf node sends the first uplink signal, as shown in FIG. 5A, the first leaf node enables the laser. A transmit wavelength of the laser is *λ*₅. The transmit wavelength *λ*₅ corresponds to a frequency *f*₅. The first leaf node sends an uplink signal via the laser at the transmit wavelength *λ*₅. Then, the first leaf node slowly adjusts the transmit wavelength used by the laser, to cause the transmit wavelength used by the laser to be close to a wavelength *λ*₁. When the central node obtains, through detection, the uplink signal sent by the first leaf node, the central node may send indication information to the first leaf node. The indication information indicates that the central node has received the uplink signal sent by the first leaf node. In this case, the transmit wavelength used by the laser is the fourth wavelength *λ*₄. In this case, the first leaf node may perform the foregoing implementation 2.

It should be noted that, before the foregoing step 601, a downlink is established between the central node and the first leaf node. This facilitates downlink communication between the central node and the first leaf node.

Optionally, the central node may indicate the first leaf node to send an uplink signal. The following describes two possible implementations.

The following describes an implementation 1 with reference to step 601a. Optionally, the embodiment shown in FIG. 6 further includes step 601a. Step 601a may be performed before step 601.

601a: The central node sends first indication information to the first leaf node.

The first indication information indicates all leaf nodes in the time-frequency multiple access system to transmit an uplink signal. In the implementation 1, when the first leaf node accesses a network, another leaf node in the time-frequency multiple access system may still transmit an uplink signal. The first leaf node may send the first uplink signal to the central node by using the implementation 2 in the foregoing step 601. Therefore, the interference to the leaf node that has been online in the time-frequency multiple access system is avoided.

The following describes an implementation 2 with reference to step 601b. Optionally, the embodiment shown in FIG. 6 further includes step 601b. Step 601b may be performed before step 601.

601b: The central node sends second indication information to the first leaf node.

The second indication information indicates the leaf node that has been online to stop sending an uplink signal in a silent window and indicates the first leaf node to send an uplink signal in the silent window. For example, a length of the silent window is 200 µs (microseconds).

Based on the foregoing step 601b, optionally, the foregoing step 601 specifically includes: The first leaf node sends, in the silent window, the first uplink signal to the central node. In the implementation 2, when the first leaf node accesses the network, the leaf node that has been online and that is in the time-frequency multiple access system stops sending an uplink signal in the silent window. The first leaf node may send the first uplink signal to the central node by using the implementation 1 or the implementation 2 in the foregoing step 601. In this way, the interference to the leaf node that has been online is avoided.

Step 602: The central node determines first information and second information based on the first uplink signal.

The first information indicates the transmit wavelength of the laser of the first leaf node. The second information indicates a first uplink sending window.

Optionally, the first information directly or indirectly indicates the transmit wavelength of the laser of the first leaf node. For example, the first information includes a first frequency offset between the first leaf node and the central node. In other words, the central node indirectly indicates the transmit wavelength of the laser of the first leaf node by using the first frequency offset. In a possible implementation, the central node detects the first uplink signal to determine a sending frequency of the first uplink signal. The central node determines the first frequency offset between the central node and the first leaf node based on a pre-agreed frequency and the sending frequency. The pre-agreed frequency is a sending frequency that is pre-agreed on by the central node and the first leaf node and that is used to send the first uplink signal.

Optionally, the second information directly or indirectly indicates the first uplink sending window.

The following describes two implementations of the second information.

Implementation 1: The second information includes a distance or round-trip time between the first leaf node and the central node.

Specifically, the central node determines sending time of the first indication information or sending time of the second indication information. Then, the central node determines receiving time of the first uplink signal. The central node determines the distance or the round-trip time between the first leaf node and the central node based on the sending time and the receiving time. For example, the round-trip time is equal to a time interval between the sending time and the receiving time. The distance between the first leaf node and the central node is equal to a product of the speed of light and a value 1. The value 1 is obtained by dividing the time interval by two.

Implementation 2: The second information includes a delay amount or a timing advance. The delay amount or the timing advance is determined based on a distance or round-trip time between the first leaf node and the central node. For example, sending time of the first indication information is a moment T1. Receiving time of the first uplink signal is a moment T2. Therefore, the round-trip time between the first leaf node and the central node is T2-T1. The delay amount or the timing advance is T2-T1-C. C is a constant, and a value of C is less than or equal to round-trip time between a leaf node closest to the central node and the central node. If (T2-T1-C) is greater than or equal to 0, it indicates the delay amount. If (T2-T1-C) is less than 0, it indicates the timing advance.

Step 603: The central node sends the first information and the second information to the first leaf node.

It should be noted that in the foregoing step 603, the first information and the second information may be simultaneously sent, or may be separately sent. This is not specifically limited in this application.

Step 604: The first leaf node sends a second uplink signal to the central node via the laser at a first wavelength.

The first wavelength is determined based on the first information. The first uplink sending window is determined based on the second information.

Optionally, the first leaf node determines the first wavelength based on the first information. The first leaf node determines the first uplink sending window based on the second information.

The following describes a process in which the first leaf node determines the first wavelength based on the first information.

Specifically, the first leaf node determines a first center frequency. The first center frequency is a center frequency that is in an operating frequency band range and that is allocated by the central node to the first leaf node. For example, the operating frequency band range is [*fₐ, f_{b}*], and the first center frequency is *f*_{c}. The first leaf node adjusts the first center frequency based on the first frequency offset. For example, the first frequency offset is Δ*f*. Therefore, an adjusted first center frequency is *f*_{c} *+* Δ*f*. Therefore, the first leaf node adjusts the transmit wavelength of the laser, to cause the adjusted transmit wavelength used by the laser to be the first wavelength. The first wavelength corresponds to the adjusted first center frequency. For example, the first wavelength is *λ*ₐ. It can be learned from the formula *f = c* / *λ* that the first wavelength corresponds to the adjusted first center frequency *f*_{c} *+* Δ*f*. Optionally, the first leaf node adjusts a temperature and/or a drive current of the laser. The temperature of the laser includes at least one of the following: a temperature of a chip in the laser and a temperature of a housing of the laser. In this way, the first leaf node locks the transmit wavelength of the laser based on the first frequency offset. The first leaf node sends an uplink signal on a corresponding frequency domain resource. In this way, collision between the first leaf node and the another leaf node in frequency domain is avoided.

The following describes a process in which the first leaf node determines the first uplink sending window based on the second information.

In a possible implementation, the second information includes the distance or the round-trip time between the first leaf node and the central node. The first leaf node determines the delay amount or the timing advance based on the distance or the round-trip time. A process in which the first leaf node determines the delay amount or the timing advance is similar to the process in which the central node determines the delay amount or the timing advance in the foregoing step 602. For details, refer to the foregoing related descriptions. Then, the first leaf node adjusts a start position and/or an end position of a second uplink sending window based on the delay amount or the timing advance, to obtain the first uplink sending window. The second uplink sending window is allocated by the central node to the first leaf node. For example, the delay amount is Δ*t*, and the second uplink sending window is [t1, t2]. In this case, it can be learned that the first uplink sending window is [t1+ Δ*t* , t2+ Δ*t* ].

In another possible implementation, the second information includes the delay amount or the timing advance. The first leaf node adjusts a start position and/or an end position of a second uplink sending window based on the delay amount or the timing advance, to obtain the first uplink sending window. For a related example of this implementation, refer to the foregoing related descriptions.

Optionally, the first leaf node may further adjust the transmit wavelength of the laser. In this way, the first leaf node accurately sends an uplink signal at a corresponding frequency domain position. In this way, the collision between the first leaf node and the another leaf node in frequency domain is further avoided, and the communication performance is improved. The following provides descriptions with reference to step 604a to step 604d. Optionally, the foregoing step 604 specifically includes step 604a to step 604d.

604a: The first leaf node sends the second uplink signal to the central node via the laser at the first wavelength.

604b: The central node determines third information based on the second uplink signal.

The third information indicates the transmit wavelength of the laser of the first leaf node. Optionally, the third information includes a second frequency offset between the central node and the first leaf node. Step 604b is similar to a process in which the central node determines the first information based on the first uplink signal in the foregoing step 602. For details, refer to related descriptions of the foregoing step 602.

604c: The first leaf node receives the third information from the central node.

604d: The first leaf node sends, in the first uplink sending window, a third uplink signal to the central node via the laser at a second wavelength. The second wavelength is determined based on the third information.

Optionally, the first leaf node determines the second wavelength based on the third information. A process in which the first leaf node determines the second wavelength is similar to the process in which the first leaf node determines the first wavelength in the foregoing step 603. For details, refer to related descriptions of the process in which the first leaf node determines the first wavelength in the foregoing step 603.

The method shown in FIG. 6 is performed between the central node and the first leaf node. Then, uplink communication may be normally performed between the central node and the first leaf node.

In the method shown in this embodiment, the first leaf node sends, in the first uplink sending window, the second uplink signal to the central node via the laser at the first wavelength. The first wavelength is determined based on the first information, and the first uplink sending window is determined based on the second information. The first information and the second information are determined by the central node based on the first uplink signal sent by the first leaf node. In this way, collision between the first leaf node and the another leaf node in the time-frequency multiple access system in frequency domain and time domain is avoided. Communication service interruption is avoided, and the communication performance is improved.

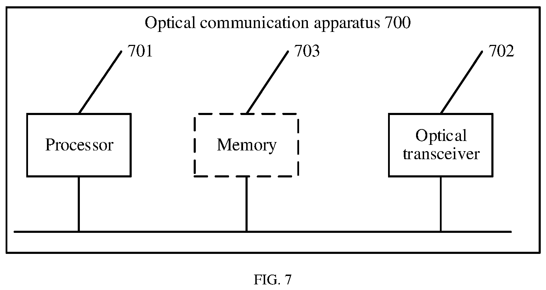

The following describes, with reference to FIG. 7, an optical communication apparatus provided in this application. FIG. 7 is a diagram of a structure of an optical communication apparatus according to an embodiment of this application.

The optical communication apparatus 700 includes a processor 701 and an optical transceiver 702. Optionally, the optical communication apparatus 700 further includes a memory 703. The processor 701, the memory 703, and the optical transceiver 702 are interconnected through a line. The memory 703 is configured to store program instructions and data.

In a possible implementation, the optical communication apparatus 700 is a central node. In this case, the memory 703 stores program instructions and data that are executed by the central node and that are in the steps shown in FIG. 6. The processor 701 and the optical transceiver 702 are configured to perform the method steps shown in the embodiment shown in FIG. 6. In FIG. 6, the processor 701 is configured to perform step 602, and the optical transceiver 702 is configured to perform steps 601, 603, and 604. Optionally, the optical transceiver 702 is further configured to perform step 601a or step 601b.

In a possible implementation, the optical communication apparatus 700 is a first leaf node. In this case, the memory 703 stores program instructions and data that are executed by the first leaf node and that are in the steps shown in FIG. 6. The processor 701 and the optical transceiver 702 are configured to perform the method steps shown in the embodiment shown in FIG. 6. In FIG. 6, the optical transceiver 702 is configured to perform steps 601, 603, and 604. Optionally, the optical transceiver 702 is further configured to perform step 601a or step 601b.

An embodiment of this application further provides a digital processing chip. A circuit and one or more interfaces for implementing functions of the foregoing processor 701 are integrated in the digital processing chip. When a memory is integrated into the digital processing chip, the digital processing chip may complete the method steps in the foregoing embodiments. When no memory is integrated into the digital processing chip, the digital processing chip may be connected to an external memory through an interface. The digital processing chip implements, based on program code stored in the external memory, the actions performed by the central node or the first leaf node in the foregoing embodiments.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method is applied to a time-frequency multiple access system, the time-frequency multiple access system comprises a central node and a first leaf node, and the method comprises:
sending, by the first leaf node, a first uplink signal to the central node;
receiving, by the first leaf node, first information and second information from the central node, wherein the first information and the second information are determined based on the first uplink signal, the first information indicates a transmit wavelength of a laser of the first leaf node, and the second information indicates a first uplink sending window; and
sending, by the first leaf node in the first uplink sending window, a second uplink signal to the central node via the laser at a first wavelength, wherein the first wavelength is determined based on the first information, and the first uplink sending window is determined based on the second information.

2. The method according to claim 1, wherein sending, by the first leaf node in the first uplink sending window, the second uplink signal to the central node via the laser at the first wavelength comprises:
sending, by the first leaf node, the second uplink signal to the central node via the laser at the first wavelength;
receiving, by the first leaf node, third information from the central node, wherein the third information is determined by the central node based on the second uplink signal, and the third information indicates a transmit wavelength of the laser of the first leaf node; and
sending, by the first leaf node in the first uplink sending window, a third uplink signal to the central node via the laser at a second wavelength, wherein the second wavelength is determined based on the third information.

3. The method according to claim 1 or 2, wherein sending, by the first leaf node, the first uplink signal to the central node comprises:
sending, by the first leaf node, the first uplink signal to the central node via the laser at a third wavelength, wherein an absolute value of a difference between transmit power of the first uplink signal and transmit power of a leaf node that has been online and that is in the time-frequency multiple access system is within a first interval, and the third wavelength is a wavelength within an uplink operating wavelength range of the time-frequency multiple access system.

4. The method according to claim 3, wherein the first interval is [5 dB, 25 dB].

5. The method according to any one of claims 1 to 4, wherein sending, by the first leaf node, the first uplink signal to the central node comprises:
sending, by the first leaf node, the first uplink signal to the central node via the laser at a fourth wavelength, wherein the fourth wavelength is a wavelength outside the operating wavelength range of the time-frequency multiple access system.

6. The method according to any one of claims 1 to 5, wherein the first information comprises a first frequency offset between the first leaf node and the central node, and the method further comprises:
determining, by the first leaf node, a first center frequency, wherein the first center frequency is a center frequency that is in an operating frequency band range and that is allocated by the central node to the first leaf node;
adjusting, by the first leaf node, the first center frequency based on the first frequency offset; and
adjusting, by the first leaf node, the transmit wavelength of the laser, wherein an adjusted transmit wavelength used by the laser is the first wavelength, and the first wavelength corresponds to an adjusted first center frequency.

7. The method according to claim 6, wherein adjusting, by the first leaf node, the transmit wavelength of the laser comprises:
adjusting, by the first leaf node, a temperature and/or a drive current of the laser.

8. The method according to any one of claims 1 to 7, wherein the second information comprises a distance or round-trip time between the first leaf node and the central node, and the method further comprises:
determining, by the first leaf node, a delay amount or a timing advance based on the distance or the round-trip time; and
adjusting, by the first leaf node, a start position and/or an end position of a second uplink sending window based on the delay amount or the timing advance, to obtain the first uplink sending window, wherein the second uplink sending window is allocated by the central node to the first leaf node.

9. The method according to any one of claims 1 to 7, wherein the second information comprises a delay amount or a timing advance, and the method further comprises:
adjusting, by the first leaf node, a start position and/or an end position of a second uplink sending window based on the delay amount or the timing advance, to obtain the first uplink sending window, wherein the second uplink sending window is allocated by the central node to the first leaf node.

10. The method according to any one of claims 1 to 9, wherein before sending, by the first leaf node, the first uplink signal to the central node, the method further comprises:
receiving, by the first leaf node, first indication information from the central node, wherein the first indication information indicates all leaf nodes in the time-frequency multiple access system to transmit an uplink signal.

11. The method according to any one of claims 1 to 9, wherein the method further comprises:
receiving, by the first leaf node, second indication information from the central node, wherein the second indication information indicates the leaf node that has been online to stop sending an uplink signal in a silent window and indicates the first leaf node to send an uplink signal in the silent window; and
sending, by the first leaf node, the first uplink signal to the central node comprises:
sending, by the first leaf node in the silent window, the first uplink signal to the central node.

12. A communication method, wherein the method is applied to a time-frequency multiple access system, the time-frequency multiple access system comprises a central node and a first leaf node, and the method comprises:
receiving, by the central node, a first uplink signal from the first leaf node;
determining, by the central node, first information and second information based on the first uplink signal, wherein the first information indicates a transmit wavelength of a laser of the first leaf node, and the second information indicates a first uplink sending window;
sending, by the central node, the first information and the second information to the first leaf node; and
receiving, by the central node in the first uplink sending window, a second uplink signal from the first leaf node, wherein
the second uplink signal is sent by the first leaf node via the laser at a first wavelength, the first wavelength is determined based on the first information, and the first uplink sending window is determined based on the second information.

13. The method according to claim 12, wherein receiving, by the central node in the first uplink sending window, the second uplink signal from the first leaf node comprises:
receiving, by the central node, the second uplink signal from the first leaf node, wherein the second uplink signal is sent by the first leaf node via the laser at the first wavelength;
determining, by the central node, third information based on the second uplink signal, wherein the third information indicates a transmit wavelength of the laser;
sending, by the central node, the third information to the first leaf node; and
receiving, by the central node, a third uplink signal sent by the first leaf node, wherein the third uplink signal is sent by the first leaf node via the laser at a second wavelength, and the second wavelength is determined based on the third information.

14. The method according to claim 12 or 13, wherein the first information comprises a first frequency offset between the first leaf node and the central node.

15. The method according to any one of claims 12 to 14, wherein the second information comprises a distance or round-trip time between the first leaf node and the central node; or the second information comprises a delay amount or a timing advance, wherein the delay amount or the timing advance is determined based on the distance or the round-trip time.

16. The method according to any one of claims 12 to 15, wherein a wavelength of the first uplink signal is a third wavelength, the third wavelength is a wavelength within an operating wavelength range of the time-frequency multiple access system, and an absolute value of a difference between transmit power of the first uplink signal and transmit power of a leaf node that has been online and that is in the time-frequency multiple access system is within a first interval.

17. A digital processing chip, wherein the chip comprises a processor and a memory, the memory and the processor are interconnected through a line, the memory stores instructions, and the processor is configured to perform the communication method according to any one of claims 1 to 11, or the processor is configured to perform the communication method according to any one of claims 12 to 16.

18. An optical communication apparatus, wherein the optical communication apparatus comprises a processor and an optical transceiver, the processor is configured to control the optical transceiver to receive and send a signal, and the processor is configured to perform the method according to any one of claims 1 to 11, or the processor is configured to perform the method according to any one of claims 12 to 16.
